# EUROPÄISCHE PATENTSCHRIFT

(11) **EP 0 942 049 B1**
(45) Veröffentlichungstag und Bekanntmachung des Hinweises auf die Patenterteilung: **29.09.2004**
(21) Anmeldenummer: 99104158.3
(22) Anmeldetag: 02.03.1999
(51) Int. Cl.: C09D 5/02, C08G 81/02, C08J 3/03, C09D 7/12, C09D 201/00

(54) **Verfahren zur Herstellung von lösungsmittelarmen, fremdemulgierten, wässrigen Bindemitteln und ihre Verwendung**
Process for the preparation of solvent poor, externally emulsified, aqueous binders and their use
Procédé pour la préparation de liants aqueux et pauvre en solvant au moyen d'émulsifiants externs et leur utilisation

(30) Priorität: 11.03.1998 AT 42998
(43) Veröffentlichungstag der Anmeldung: 15.09.1999
(73) Patentinhaber: Surface Specialties Austria GmbH, 8402 Werndorf (AT)
(72) Erfinder: Wilfinger, Werner, Dr., 8042 Graz (AT); Kriessmann, Ingo, Dr., 8010 Graz (AT); Gossak, Kurt, 8042 Graz (AT); Luttenberger, Johann, 8053 Graz (AT)
(74) Vertreter: Deckers, Hellmuth, Dr.

(56) Entgegenhaltungen:
- EP-A- 0 496 079
- EP-A- 0 754 718
- WO-A-95/17450

## Beschreibung

Die Erfindung betrifft ein Verfahren zur Herstellung von lösemittelarmen fremdemulgierten, wäßrigen Lackbindemitteln, welche eine wasserunlösliche Harzkomponente und als Emulgatorharz ein carboxyl- und hydroxyfunktionelles Reaktionsprodukt aus einem im wesentlichen wasserunlöslichen, hydroxyfunktionellen Polymer (Polyhydroxylkomponente) und einem nach zumindest teilweiser Neutralisation wasserlöslichen, carboxylfunktionellen Polymer (Polycarboxylkomponente) enthalten. Die zu emulgierende, wasserunlösliche Harzkomponente wird dem Emulgatorharz vor dessen Emulgieren in Wasser zugesetzt, die erhaltene Mischung wird anschließend nach zumindest teilweiser Neutralisation der Carboxylgruppen mit Aminen oder Alkalien durch Zugabe von Wasser oder Einrühren in Wasser in eine wäßrige Emulsion überführt.

Wasserverdünnbare Bindemittel, die durch Mischung oder partielle Kondensation einer nach Neutralisation der Carboxylgruppen wasserlöslichen Polycarboxylkomponente mit einer harzartigen, an sich nicht wasserverdünnbaren Polyhydroxylkomponente erhalten werden, und die sich durch ein günstiges Viskositätsverhalten beim Verdünnen mit Wasser auszeichnen, werden in einer Reihe von Patenten beschrieben, beispielsweise in den AT-B 328 587, AT-B 379 607, AT-B 388 738 und AT-B 388 382.

In der AT-B 328 587 werden zwar Acrylatcopolymere als Polycarboxylkomponente angegeben, doch sind auf Basis der dort beschriebenen üblichen Monomerenzusammensetzung keine in der Praxis brauchbaren Lacke formulierbar, da diese in ihren Applikationseigenschaften Nachteile aufweisen, wie die Tendenz zur Bläschenbildung und zum Abrinnen während des Einbrennvorgangs, selbst bei geringen Schichtstärken.

In der EP-A 0 754 718 werden wäßrige fremdemulgierte Acrylatharzdispersionen beschrieben, die Massenanteile im Feststoff von 5 bis 50 % einer hydrophilen Polyesterkomponente und 95 bis 50 % eines Hydroxylgruppen- und Säuregruppen-haltigen Acrylatcopolymeren enthalten. In der EP-A 0 496 079 werden wasserverdünnbare Lackbindemittel auf der Basis von Acrylatcopolymerisaten beschrieben, die durch partielle Kondensation einer Polycarboxylkomponente und einer Polyhydroxylkomponente und nachfolgende zumindest teilweise Neutralisation der Carboxylgruppen erhalten werden, wobei gegebenenfalls als Vernetzungskomponente ein hydrophobes Aminoharz zugemischt werden kann. Aus der WO-A 95/17450 ist ein Verfahren zur Herstellung von wasserverdünnbaren Lackbindemitteln auf der Basis von Acrylatcopolymeren bekannt, wobei eine Polycarboxylkomponente mit einer Epoxidgruppen enthaltenden Polyhydroxylkomponente umgesetzt wird.

In der DE-C 43 15 593 werden fremdemulgierte Zweikomponenten-Beschichtungsmittel beschrieben, enthaltend ein wasserunlösliches Hydroxylgruppen-haltiges Polyester- oder Polyacrylatharz, das durch Zusatz von anionischen, kationischen oder nichtionischen Emulgatoren in einem Massenanteil von 0,1 bis 1 %, bezogen auf die Masse des in einem organischen Lösungsmittel gelösten Harzes, emulgiert wird, und ein flüssiges organisches Polyisocyanat.

Generell zeigen fremdemulgierte wäßrige Bindemittelsysteme, wie auch das in DE-C 43 15 593 beschriebene, erhebliche Nachteile, die ihre Anwendungsbreite erheblich einschränken: sie besitzen unzureichende Scherstabilität; die Herstellung stabiler Pigmentpasten ist schwierig oder sogar unmöglich; die Beständigkeit der damit hergestellten Lackfilme ist besonders gegenüber Wasser unzureichend; und schließlich ist ihre Lagerstabilität ungenügend.

Die Erfindung betrifft demgemäß ein Verfahren zur Herstellung von lösemittelarmen fremdemulgierten, wäßrigen Bindemitteln, die diese Nachteile nicht oder nur in vermindertem Maße aufweisen, bei dem
- im ersten Schritt ein wasserunlösliches hydroxyfunktionelles Polymer **B1**, und ein carboxylfunktionelles Polymer **B2,** ohne Lösungsmittel oder gelöst in einem organischen Lösungsmittel gemischt werden,
- im zweiten Schritt das Lösungsmittel durch Anlegen eines Unterdrucks und Erwärmen soweit entfernt wird, bis der Festkörper-Massenanteil mindestens 85 % beträgt,
- im dritten Schritt die Mischung bei einer Temperatur von 90 bis 150 °C solange gehalten wird, bis das durch Veresterung aus **B1** und **B2** erhältliche Reaktionsprodukt **B** im Massenverhältnis von 3 Teilen Harz zu 7 Teilen Wasser homogen emulgierbar ist,
- im vierten Schritt das Reaktionsprodukt durch Zugabe eines Neutralisationsmittels in einer Menge, die ausreicht, um 5 % bis 150 % der nach der Reaktion verbliebenen Carboxylgruppen in **B2** zu neutralisieren, neutralisiert wird,
- im fünften Schritt sodann eine wasserunlösliche Kunstharz-Komponente **A** ausgewählt aus Polyacrylaten, Polyestern, Alkydharzen, Epoxidharzen, Phenolharzen und Polyurethanen zugefügt wird und schließlich
- im sechsten Schritt die Mischung in Wasser emulgiert wird.

Bevorzugt wird das Kunstharz **B2** so gewählt, daß es nach zumindest teilweiser Neutralisation in Wasser homogen emulgierbar ist.

Insbesondere hat das Reaktionsprodukt (Emulgatorharz) **B** eine Säurezahl von 25 bis 100 mg/g, bevorzugt 30 bis 80 mg/g.

Das Emulgatorharz **B** wird bevorzugt so hergestellt, daß im ersten Schritt
- ein carboxylfunktionelles Polymer **B2** (Polycarboxylkomponente), das bevorzugt eine Säurezahl von 40 bis 350 mg/g, insbesondere von 100 bis 250 mg/g, aufweist, mit
- einem im wesentlichen wasserunlöslichen, hydroxyfunktionellen Polymer **B1** (Polyhydroxylkomponente) mit bevorzugt einer Hydroxylzahl von 40 bis 250 mg/g und gegebenenfalls einem Epoxidgruppengehalt, bezogen auf die Masse des Feststoffs, von 35 bis 260 mmol/kg, gemischt wird,
wobei die Polymeren **B1** und **B2** ohne Lösungsmittel oder in einem organischen Lösungsmittel gelöst eingesetzt werden können, und bevorzugt beträgt der Massenanteil des **B1** 85 bis 55 % an der Summe der Massen von **B1** und **B2** , und beträgt der Massenanteil des **B2** an der Summe der Massen von **B1** und **B2** 15 bis 45 % , wobei sich die Summe der Massenanteile auf 100 % ergänzt, mit der bevorzugten Maßgabe, daß die Mischung eine Säurezahl von mindestens 25 mg/g aufweist, anschließend im zweiten Schritt das Lösungsmittel durch Anlegen eines Unterdrucks und Erwärmen soweit entfernt wird, bis der Festkörper-Massenanteil mindestens 85 % beträgt, und man im dritten Schritt die Mischung bei einer Temperatur von 90 bis 150 °C so lange reagieren läßt, bis eine mit einer Base neutralisierte Probe mit Wasser im Massenverhältnis 3 : 7 (Harz **B** zu Wasser) homogen emulgierbar ist.

Die lösungsmittelarmen fremdemulgierten wäßrigen Bindemittel werden dann so hergestellt, daß das Emulgatorharz, dessen Herstellung oben beschrieben ist, im vierten Schritt durch Zugabe eines Neutralisationsmittels in einer Menge, die ausreicht, um 5 bis 150 % der nach der Reaktion verbliebenen Carboxylgruppen in **B2** zu neutralisieren, neutralisiert wird, im fünften Schritt sodann das Kunstharz **B1** zugefügt wird und schließlich im sechsten Schritt die Mischung in Wasser emulgiert wird. Man kann die wäßrigen Bindemittel auch so herstellen, daß zuerst **B1** zu **B2** zugegeben wird, die Mischung neutralisiert und bei 90 bis 150 °C solange gehalten wird, bis eine neutralisierte Probe in Wasser nach der oben angegebenen Methode geprüft und als homogen emulgierbar befunden wurde.

Die Säurezahl ist gemäß DIN 53 402 definiert als der Quotient derjenigen Masse ***m***_{KOH} an Kaliumhydroxid, die erforderlich ist, um eine zu untersuchende Probe B zu neutralisieren, und der Masse ***m***_{B} dieser Probe (Masse des Feststoffes in der Probe bei Lösungen oder Dispersionen); ihre übliche Einheit ist "mg/g". Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe B, und der Masse ***m***_{B} dieser Probe (Masse des Feststoffes in der Probe bei Lösungen oder Dispersionen); ihre übliche Einheit ist "mg/g". Der spezifische (massenbezogene) Epoxidgruppengehalt ***SEG*** ist als Quotient der Stoffmenge ***n***_{EP} an Epoxidgruppen und der Masse der Probe ***m***_{B} (Masse des Feststoffs der Probe, wenn es sich um eine Lösung oder Dispersion handelt) definiert; die übliche Einheit ist mmol/kg. Der Kehrwert des SEG wird auch als "Epoxidäquivalentgewicht" oder "Epoxidäquivalent" oder "EV-Wert" bezeichnet, mit der Einheit g/mol.

Unter "homogen emulgierbar" wird hier verstanden, daß mit dem unbewaffneten Auge keine diskreten Teilchen bzw. Harztröpfchen wahrnehmbar sind, und daß die erhaltene Emulsion auch nach 24 Stunden Lagerung bei Raumtemperatur keine Inhomogenität oder Absetzen zeigt.

Bevorzugt wird die Komponente **B2** so ausgewählt, daß sie nach zumindest teilweiser Neutralisation homogen emulgierbar ist. Dazu sollen mindestens 5 % der Carboxylgruppen in **B2** durch Zugabe einer adäquaten Menge eines Neutralisationsmittels (Alkalihydroxide, Amine) neutralisiert werden.

Dabei können die Komponente **B1** und **B2** jeweils ausgewählt sein aus Polymeren vom Typ der Polyacrylate, der Polyester, der Polyurethane, der Epoxidharze, der Alkydharze, der Melaminharze und der Phenolharze. Unter Polyestern werden auch solche verstanden, die untergeordnete Anteile an Polyäther- und Polyamidsegmenten enthalten; ebenso können die Polyurethane Polyäther-, Polyester- und Polyharnstoffsegmente enthalten. Dabei sollen die Stoffmengenanteile der jeweils andersartig gebundenen Segmente in den Polymeren 20 % nicht übersteigen.

Bevorzugt werden als Komponente **B1** Hydroxylgruppen-haltige Polyacrylate und als Komponente **B2** Carboxylgruppen-haltige Polyacrylate eingesetzt. Unter Polyacrylaten werden im Folgenden solche Kunstharze verstanden, bei denen ein Monomergemisch zur Synthese eingesetzt wird, das einen Stoffmengenanteil von mindestens 50 % an solchen Monomeren aufweist, die sich von Acrylsäure oder Methacrylsäure ableiten (oder diese Säuren selbst enthalten). Diese sog. "Acryl-Monomeren" sind demnach ausgewählt aus den Alkyl- und Hydroxyalkylestem von Acryl- und Methacrylsäure, aus diesen Säuren selbst, ihren Amiden, ihren N-Alkyl- und N,N-Dialkyl-Amiden, ihren Nitrilen sowie ihren Estern mit epoxidierten Alkoholen, wie z.B. Glycidyl-(meth)acrylat. Die Alkyl- bzw. Hydroxyalkylgruppen weisen unabhängig voneinander 1 (bzw. 2) bis 18, bevorzugt bis 8, und besonders bevorzugt bis zu 4 Kohlenstoffatome auf. Als Comonomere eignen sich alle radikalisch copolymerisierbaren olefinisch ungesättigten Monomeren.

Besonders bevorzugt werden Methylacrylat, Äthylacrylat, Hydroxyäthyl- und Hydroxypropylacrylat sowie Butylacrylat und 2-Äthylhexylacrylat und die entsprechenden Methacrylate eingesetzt. Es lassen sich auch Halbester der (Meth)Acrylsäure mit Polyalkylenäther-Glykolen wie Polyäthylenglykol und Polypropylenglykol einsetzen. Als Comonomer werden z.B. aromatische Vinylverbindungen wie Styrol und Vinyltoluol, Vinyläther wie Methylvinyläther, Vinylester wie Vinylacetat und -propionat sowie Versaticsäure-Vinylester, sowie α,β-ungesättigte (Di)carbonsäuren und deren Ester und Halbester wie Dimethylmaleinat, Methylcrotonat, Mesaconsäuremonomethylester usw. eingesetzt. Die erwünschte Carboxyl- bzw. Hydroxylfunktionalität wird durch Wahl der Art und Menge der carboxyl- bzw. hydroxylfunktionellen Monomeren eingestellt.

Die Herstellung der Komponenten **B1** und **B2** auf Acrylatbasis erfolgt in bekannter Weise vorzugsweise durch Lösungspolymerisation, besonders bevorzugt in Alkoholen oder Glykoläthern. Die Polymerisation wird durch Zugabe von radikalischen Initiatoren, wie Peroxiden, Peroxyäthern oder aliphatischen Azoverbindungen, bei erhöhter Temperatur (bevorzugt 60 bis 160 °C) ausgelöst.

Die emulgierten, wasserunlöslichen Bindemittel **A** werden ebenfalls ausgewählt aus den Gruppen der Polyacrylate, der Polyester, der Polyurethane, der Epoxidharze, der Alkydharze, der Melaminharze und der Phenolharze. Es ist besonders bevorzugt, die zu emulgiernden Kunstharze **A** aus derselben Gruppe wie die Komponenten des Emulgators **B** zu wählen.

Als zu emulgierende, wasserunlösliche Kunstharzkomponente **A** kommen hauptsächlich hydroxyfunktionelle Acrylharze (Polyacrylate) sowie auch solche Acrylharze, die Carboxylgruppen oder Carboxyl- und Hydroxylgruppen tragen, zum Einsatz, die dem weitgehend vom Lösungsmittel befreiten Reaktionsprodukt (Emulgatorharz **B**) vor dessen Emulgieren in Wasser im Massenverhältnis von 70 : 30 bis 30 : 70, bevorzugt 60 : 40 bis 40 : 60, zugesetzt werden. Nach zumindest teilweiser Neutralisation mit Aminen oder Alkalien wird die Harzmischung in eine wäßrige Emulsion überführt. Unter teilweiser Neutralisation wird hier verstanden, daß ein Stoffmengenanteil von bevorzugt mindestens 25 % der ursprünglich vorhandenen Säuregruppen im Polymer neutralisiert, also in Carboxylatgruppen überführt wird. Die Menge des Neutralisationsmittels ist nach oben nicht kritisch begrenzt, bevorzugt wird sie so gewählt, daß bis zu 200 %, besonders bevorzugt bis zu 150 % der ursprünglich vorhandenen Säuregruppen neutralisiert werden könnten.

Bevorzugt ist die Menge des Neutralisationsmittels im vierten Schritt so bemessen, daß 25 bis 150% der Carboxylgruppen von B neutralisiert werden.

Auch für an sich wasserunlösliche Lack-Additive läßt sich ein Emulgator **B** mit Vorteil anwenden; die Massenverhältnisse können in diesem Fall sogar von 85 : 15 Teilen des Emulgators **B** zu Additiv **A** bis zu 15 : 85 betragen.

Bei der Emulgierung lassen sich die Verfahrensweise der Direkt-Emulgierung sowie die der Invers-Emulgierung anwenden (Einrühren der Harzmischung in einen Überschuß an Wasser oder Einrühren von Wasser in die Harzmischung unter starker Scherung, bevorzugt mit einem Ultraschall-Mischer, einem Mischer mit Dissolver-Scheibe oder einem Mischer vom Rotor-Stator Typ).

Bevorzugte Verwendung dieser lösungsmittelarmen fremdemulgierten wäßrigen Bindemittel ist in Beschichtungsmitteln, Klebstoffen, Schlichtemitteln und Imprägniermitteln, insbesondere in Einkomponenten-Beschichtungsmitteln und in Zweikomponenten-Beschichtungsmitteln.

Die so erhaltenen Bindemittel werden als 1K-Systeme, z. B. Melaminharz-vernetzende Einbrennlacke oder als 2K-Systeme, z.B. Isocyanat-vernetzende Lacke bei Raumtemperatur, unter forcierter Trocknung bei erhöhter Temperatur vernetzende oder unter Einbrennbedingungen vernetzenden Lacke eingesetzt.

Gegenüber dem Stand der Technik resultieren im Decklackstand, Verlauf und Glanz deutlich verbesserte Produkte bei gleichbleibenden Beständigkeiten gegen Chemikalien und Wetter-Einflüsse.

Mit solchen Emulgatoren formulierte wäßrige Bindemittel lassen sich in Beschichtungsmitteln für Metalle, Holz, Papier und Pappe, Leder und andere steife und biegsame Substrate mit Vorteil anwenden. Es lassen sich auch wäßrige Klebstoffe und Haftgrundschichten aufdiese Art formulieren. Es ist weiter möglich, mit Hilfe der Emulgatorharze auch ansonsten wasserunlösliche Schlichtemittel, z. B. für Textilien und Imprägniermittel z. B. für Papier in wasserlöslichen oder wasserverdünnbaren Formulierungen bereitzustellen.

Die Erfindung wird durch die nachfolgenden Beispiele erläutert.

In den nachfolgenden Beispielen bedeuten ebenso wie im vorhergehenden Text alle Angaben mit der Einheit "%", Massenanteile, soweit nicht anders angegeben. "Teile" sind stets Massenteile. Konzentrationsangaben in "%" sind Massenanteile des gelösten Stoffes in der Lösung.

### Herstellung der Emulgatorharze

### Herstellung der in den Beispielen verwendeten Polycarboxylkomponenten B2 und Polyhydroxylkomponenten B1 auf Acrylatbasis

Die Copolymerisate wurden in bekannter Weise durch Lösungspolymerisation in Isopropanol entsprechend einem berechneten Festkörper-Massenanteil von 50 % für die Polycarboxylkomponenten **B2** bzw. 65 % für die Polyhydroxylkomponenten **B1** hergestellt. Dabei wurde das als Lösungsmittel verwendete Isopropanol vorgelegt, zum Sieden am Rückfluß erhitzt, und die Monomerenmischung mit einem Massenanteil von 2 % an Azobis-Isovaleronitril als Initiator während 5 Stunden zudosiert, wobei die Mischung am Sieden gehalten wurde. Nach einer Nachpolymerisationszeit (1 Stunde) wurde abgekühlt und zur weiteren Verwendung gelagert. Die Art und Menge der eingesetzten Monomeren sowie die bestimmten Meßgrößen sind in Tabelle 1 zusammengefaßt.

**Tabelle 1**

| eingesetzte Monomere | Polycarboxylkompente | | | | Polyhydroxylkomponente | | | |
|---|---|---|---|---|---|---|---|---|
| | **B2-4** | **B2-1** | **B2-2** | **B2-3** | **B1-1** | **B1-2** | **B1-3** | **B1-4** |
| Butylacrylat | - | 34 | 35 | 12 | 30 | - | 20 | - |
| Äthylhexylacrylat | 25 | - | - | - | - | 30 | - | - |
| 2-Ätyhlhexylacrylat | - | - | - | 28 | - | - | - | - |
| Methylmethacrylat | 13 | 27 | - | 30 | - | - | 30 | - |
| Isobutylmethacrylat | - | - | - | - | - | - | - | - |
| Isobornylmethacrylat | - | 26 | - | - | 20 | - | - | 22 |
| Styrol | 22 | - | 40 | - | 39 | 45 | - | 20 |
| Acrylsäure | 40 | 13 | - | 30 | - | - | - | - |
| Methacrylsäure | - | - | 25 | - | - | - | - | - |
| 2-Hydroxyäthylacrylat | - | - | - | - | - | 25 | - | - |
| 4-Hydroxybutylacrylat | - | - | - | - | - | - | - | 35 |
| 2-Hydroxyäthylmethacrylat | - | - | - | - | 10 | - | 40 | 23 |
| Tripropylenglykolmethacrylat | - | - | - | - | - | - | 10 | - |
| Glycidylmethacrylat | - | - | - | - | 1 | - | - | - |
| Säurezahl in mg/g | 311 | 101 | 163 | 233 | - | - | - | - |
| Hydroxylzahl in mg/g | - | - | - | - | 43 | 121 | 167 | 235 |
| Spezifischer Epoxidgruppen-Gehalt in mmol/kg | - | - | - | - | 70 | - | - | - |

### Herstellung fremdemulgierter Acrylharze

### Beispiel 1:

Eine Mischung aus 120 Teilen **B2-4** (240 g Lösung) mit 180 Teilen **B1-1** (276,9 g Lösung) wurde in einem geeigneten Reaktor durch Destillation auf einen Festkörper-Massenanteil von 91 % eingeengt. Danach wurde bei 105 °C solange gehalten, bis das Reaktionsprodukt gemäß der oben angegebenen Vorschrift im Mischungsverhältnis von 3 g Harz zu 7 g Wasser homogen emulgierbar war. Das Emulgatorharz (Säurezahl = 124 mg/g, Hydroxylzahl = 26 mg/g) wurde mit N,N-Dimethyläthanolamin bis zu einem Neutralisationsgrad von 80 % der ursprünglich vorhandenen Carboxylgruppen versetzt und unter Rühren auf 100 °C gekühlt. Anschließend wurden 700 Teile (1000 g Lsg.) Macrynal® SM 516/70 % BAC (Hydroxylgruppen-haltiges Acrylharz, 70 % ige Lösung in n-Butylacetat; Komponente **A1**) eingerührt und die Mischung nach dem Homogenisieren in Wasser emulgiert.

| | | |
|---|---|---|
| Harzkennzahlen: | Festkörper-Massenanteil | 44,2 % |
| | Säurezahl: | 40 mg/g |
| | Hydroxylzahl: | 112 mg/g |
| | pH-Wert: | 8,5 |

### Beispiel 2:

Eine Mischung aus 150 Teilen **B2-3** (300 g Lösung) mit 350 Teilen **B1-2** (538,5 g Lösung) wurde in einem geeigneten Reaktor durch Destillation auf einen Feststoffgehalt von 87 % eingeengt. Danach wurde bei 115 °C solange gehalten, bis das Reaktionsprodukt gemäß der oben angegebenen Vorschrift im Mischungsverhältnis von 3 g Harz zu 7 g Wasser homogen emulgierbar war. Das so hergestellte Emulgatorharz **B** (Säurezahl = 70 mg/g, Hydroxylzahl = 85 mg/g) wurde mit N,N-Dimethyläthanolamin bis zu einem Neutralisationsgrad von 100 % der ursprünglich vorhandenen Carboxylgruppen versetzt, homogenisiert und unter Rühren auf 100 °C gekühlt. Anschließend wurden 500 Teile (667 g Lösung) Synthacryl ® SC 370/75 SNA (hydroxyfunktionelles Acrylharz; 75 %ige Lösung in einem Gemisch aus alkylierten aromatischen Kohlenwasserstoffen; Komponente **A2**) eingerührt und nach dem Homogenisieren in Wasser emulgiert.

| | | |
|---|---|---|
| Harzkennzahlen: | Festkörper-Massenanteil | 45,2 % |
| | Säurezahl: | 40 mg/g |
| | Hydroxylzähl: | 103 mg/g |
| | pH-Wert: | 8,8 |

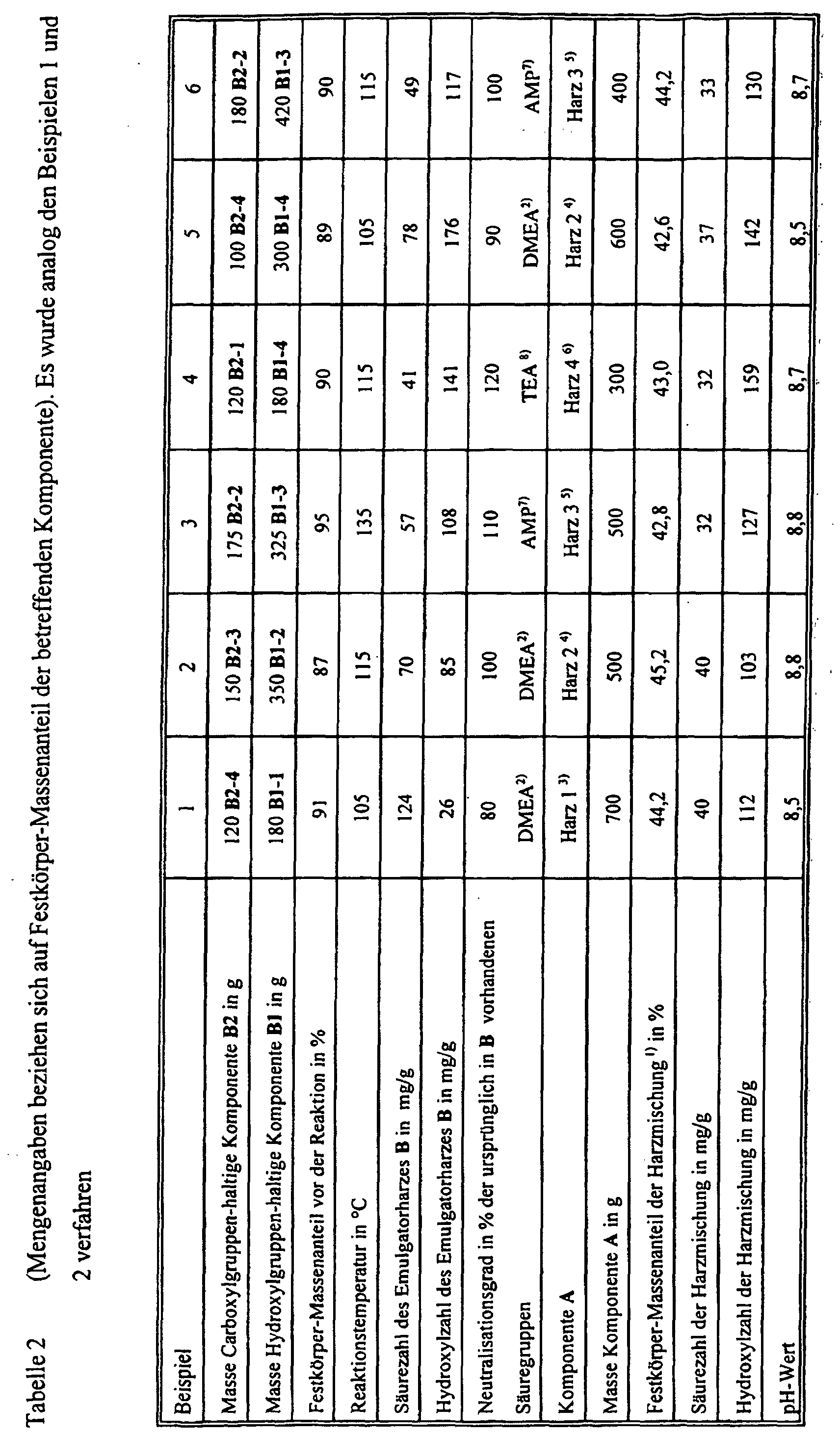

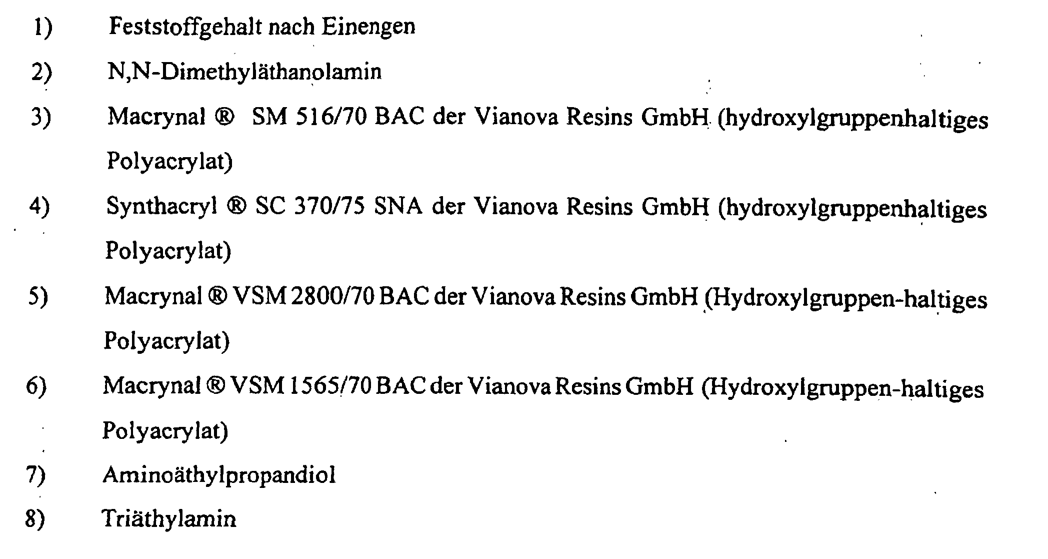

## Patentansprüche

1. Verfahren zur Herstellung von lösungsmittelarmen fremdemulgierten wäßrigen Bindemitteln, **dadurch gekennzeichnet, daß**
- im ersten Schritt ein wasserunlösliches hydroxyfunktionelles Polymer **B1**, und ein carboxylfunktionelles Polymer **B2**, ohne Lösungsmittel oder gelöst in einem organischen Lösungsmittel gemischt werden,
- im zweiten Schritt das Lösungsmittel durch Anlegen eines Unterdrucks und Erwärmen soweit entfernt wird, bis der Festkörper-Massenanteil mindestens 85 % beträgt,
- im dritten Schritt die Mischung bei einer Temperatur von 90 bis 150 °C solange gehalten wird, bis das durch Veresterung aus **B1** und **B2** erhältliche Reaktionsprodukt **B** im Massenverhältnis von 3 Teilen Harz zu 7 Teilen Wasser homogen emulgierbar ist,
- im vierten Schritt das Reaktionsprodukt durch Zugabe eines Neutralisationsmittels in einer Menge, die ausreicht, um 5 % bis 150 % der nach der Reaktion verbliebenen Carboxylgruppen in **B2** zu neutralisieren, neutralisiert wird,
- im fünften Schritt sodann eine wasserunlösliche Kunstharz-Komponente **A** ausgewählt aus Polyacrylaten, Polyestern, Alkydharzen, Epoxidharzen, Phenolharzen und Polyurethanen zugefügt wird und schließlich
- im sechsten Schritt die Mischung in Wasser emulgiert wird.

2. Verfahren nach Anspruch 1, **dadurch gekennzeichnet, daß** der Massenanteil des **B1** 85 bis 55 % an der Summe der Massen von **B1** und **B2** beträgt, und der Massenanteil des **B2** 15 bis 45 % beträgt, wobei sich die Summe der Massenanteile auf 100 % ergänzt.

3. Verfahren nach Anspruch 1, **dadurch gekennzeichnet, daß** als Polymer **B1** ein Kunstharz mit einer Hydroxylzahl von 40 bis 250 mg/g eingesetzt wird.

4. Verfahren nach Anspruch 1, **dadurch gekennzeichnet, daß** als Polymer B2 ein Kunstharz mit einer Säurezahl von 40 bis 350 mg/g eingesetzt wird.

5. Verfahren nach Anspruch 3, **dadurch gekennzeichnet, daß** das Polymer **B1** einen Epoxidgruppengehalt, bezogen auf die Masse des Feststoffs, von 35 bis 260 mmol/kg aufweist.

6. Verfahren nach Anspruch 1, **dadurch gekennzeichnet, daß** im dritten Schritt das Reaktionsprodukt **B** eine Säurezahl von 25 bis 100 mg/g aufweist.

7. Verfahren nach Anspruch 1, **dadurch gekennzeichnet, daß** im vierten Schritt die Menge des Neutralisationsmittels so zugegeben ist, daß 25 % bis 150 % Carboxylgruppen von B neutralisiert werden.

8. Verfahren nach Anspruch 1, **dadurch gekennzeichnet, daß** im fünften Schritt das Massenverhältnis von wasser unlöslicher Kunstharzkomponente A zu dem Reaktionsprodukt B 70:30 bis 30:70 beträgt.

9. Verfahren nach Anspruch 1, **dadurch gekennzeichnet, daß** als A ein Polyacrylat eingesetzt wird.

10. Verwendung von lösungsmittelarmen fremdemulgierten wäßrigen Bindemitteln erhältlich nach Anspruch 1 in Beschichtungsmitteln, Klebstoffen, Schlichtemitteln und Imprägniermitteln.

11. Verwendung von lösungsmittelarmen fremdemulgierten wäßrigen Bindemitteln erhältlich nach Anspruch 1 in Einkomponenten-Beschichtungsmitteln.

12. Verwendung von lösungsmittelarmen fremdemulgierten wäßrigen Bindemitteln erhältlich nach Anspruch 1 in Zweikomponenten-Beschichtungsmitteln.

## Claims

1. A process for preparing an externally emulsified low-solvent aqueous binder, which comprises
- in the first step mixing a water-insoluble hydroxy-functional polymer **B1** and a carboxyl-functional polymer **B2** without solvent or dissolved in an organic solvent,
- in the second step removing the solvent by applying subatmospheric pressure and heating until the mass fraction of solids is at least 85%,
- in the third step maintaining the mixture at a temperature from 90 to 150°C until the reaction product obtainable from **B1** and **B2** by esterifying is homogeneously emulsifiable in a mass ratio of 3 parts of resin to 7 parts of water,
- in the fourth step neutralizing the reaction product by adding a neutralizing agent in an amount sufficient to neutralize from 5% to 150% of the carboxyl groups in **B2** that have remained following the reaction,
- then, in the fifth step, adding a water-insoluble synthetic resin component **A** selected from polyacrylates, polyesters, alkyd resins, epoxy resins, phenolic resins and polyurethane, and finally,
- in the sixth step, emulsifying the mixture in water.

2. A process as claimed in claim 1, wherein the mass fraction of **B1** is from 85 to 55% of the sum of the masses of **B1** and **B2** and the mass fraction of **B2** is from 15 to 45%, the sum of the mass fractions adding to 100%.

3. A process as claimed in claim 1, wherein as polymer **B1** a synthetic resin having a hydroxyl number of from 40 to 250 mg/g is used.

4. A process as claimed in claim 1, wherein as polymer **B2** a synthetic resin having an acid number of from 40 to 350 mg/g is used.

5. A process as claimed in claim 3, wherein the polymer **B1** has an epoxide group content, based on the mass of the solid, of from 35 to 260 mmol/kg.

6. A process as claimed in claim 1, wherein in the third step the reaction product **B** has an acid number of from 25 to 100 mg/g.

7. A process as claimed in claim 1, wherein in the fourth step the amount of the neutralizing agent is added such that from 25% to 150% of carboxyl groups of **B** are neutralized.

8. A process as claimed in claim 1, wherein in the fifth step the mass ratio of water-insoluble synthetic resin component **A** to the reaction product **B** is from 70:30 to 30:70.

9. A process as claimed in claim 1, wherein as **A** a polyacrylate is used.

10. The use of an externally emulsified low-solvent aqueous binder obtainable as claimed in claim 1 in a coating composition, adhesive, sizing agent or impregnating composition.

11. The use of an externally emulsified low-solvent aqueous binder obtainable as claimed in claim 1 in a one-component coating composition, adhesive, sizing agent or impregnating composition.

12. The use of an externally emulsified low-solvent aqueous binder obtainable as claimed in claim 1 in a two-component coating composition.

## Revendications

1. Procédé pour la préparation de liants aqueux pauvres en solvant émulsifiés de façon externe, **caractérisé en ce que**,
- dans une première étape un polymère B1 hydroxyfonctionnel non soluble dans l'eau et un polymère B2 carboxylfonctionnel sont mélangés sans solvant ou dissous dans un solvant organique,
- dans une deuxième étape le solvant est supprimé par application d'une sous-pression et chauffage jusqu'à ce que la proportion massique de solides s'élève au moins à 85 %,
- dans une troisième étape le mélange est maintenu à une température de 90 à 150°C jusqu'à ce que le produit de réaction B obtenu par estérification à partir de B1 et B2 puisse être émulsifié de façon homogène dans un rapport massique de 3 parties de résine pour 7 parties d'eau,
- dans une quatrième étape le produit de réaction est neutralisé par l'addition d'un agent de neutralisation en une quantité qui suffit à neutraliser 5 % à 150 % des groupes carboxyles restant après la réaction dans B2,
- dans une cinquième étape ensuite un composant de résine synthétique non soluble dans l'eau A choisi parmi les polyacrylates, les polyesters, les résines alkydes, les résines époxydes, les résines phénoliques et les polyuréthanes est ajouté et enfin,
- dans une sixième étape le mélange est émulsifié dans l'eau.

2. Procédé selon la revendication 1, **caractérisé en ce que** la proportion massique de B1 s'élève entre 85 et 55 % de la somme des masses de B1 et B2 et **en ce que** la proportion massique de B2 s'élève entre 15 et 45 % de façon à ce que la somme des proportions massiques atteigne 100 %.

3. Procédé selon la revendication 1, **caractérisé en ce que** comme polymère B1, une résine synthétique présentant un indice d'hydroxyle de 40 à 250 mg/g est utilisée.

4. Procédé selon la revendication 1, **caractérisé en ce que** comme polymère B2, une résine synthétique présentant un indice d'acide de 40 à 350 mg/g est utilisée.

5. Procédé selon la revendication 3, **caractérisé en ce que** le polymère B1 présente une teneur en groupes époxyde, par rapport à la masse de substance solide, de 35 à 260 mmol/kg.

6. Procédé selon la revendication 1, **caractérisé en ce que** dans la troisième étape, le produit de réaction B présente un indice d'acide de 25 à 100 mg/g.

7. Procédé selon la revendication 1, **caractérisé en ce que** dans la quatrième étape, la quantité d'agent de neutralisation est ajoutée de sorte que 25 % à 150 % des groupes carboxyle de B soient neutralisés.

8. Procédé selon la revendication 1, **caractérisé en ce que** dans la cinquième étape, le rapport massique du composant de résine synthétique A non soluble dans l'eau par rapport au produit de réaction B s'élève de 70 : 30 à 30 : 70.

9. Procédé selon la revendication 1, **caractérisé en ce que** l'on utilise un polyacrylate en tant que A.

10. Utilisation de liants aqueux pauvres en solvant émulsifiés de façon externe obtenus selon la revendication 1 dans des agents de revêtement, des substances adhésives, des pâtes d'encollage et des agents d'imprégnation.

11. Utilisation de liants aqueux pauvres en solvant émulsifiés de façon externe obtenus selon la revendication 1 dans des agents de revêtement monocomposant.

12. Utilisation d'une préparation de liants pauvres en solvant émulsifiés de façon externe obtenus selon la revendication 1 dans des agents de revêtement bicomposant.
